# EUROPÄISCHE PATENTANMELDUNG

(11) **EP 1 500 666 A2**
(43) Veröffentlichungstag der Anmeldung: **26.01.2005**
(21) Anmeldenummer: 04017210.8
(22) Anmeldetag: 21.07.2004
(51) Int. Cl.: C08F 2/38, C08F 2/10

(54) **Verwendung von C4-C6-Polymercaptopolyolen als Regler bei der Lösungs- oder Fällungspolymerisation**

(30) Priorität: 22.07.2003 DE 10333319
(71) Anmelder: BASF AKTIENGESELLSCHAFT, 67056 Ludwigshafen (DE)
(72) Erfinder: Michl, Kathrin, 67063 Ludwigshafen (DE); Lüdecke Taeger, Tilman, 64342 Seeheim-Jugenheim (DE); Pabst, Gunther, 92318 Neumarkt (Oberpfalz) (DE); Lamalle, Philippe, 67271 Lambsheim (DE); Hüffer, Stephan, 67063 Ludwigshafen (DE); Schroeder, Stefan, 67271 Neuleiningen (DE)
(74) Vertreter: Reitstötter, Kinzebach & Partner (GbR) Patentanwälte

(57) **Zusammenfassung**

Die vorliegende Erfindung betrifft die Verwendung von C₄-C₆-Polymercaptopolyolen als Regler bei der radikalisch initiierten Lösungs- und Fällungspolymerisation ethylenisch ungesättigter Monomere.

## Beschreibung

Die vorliegende Erfindung betrifft die Verwendung von C₄-C₆-Polymercaptopolyolen als Regler bei der radikalisch initiierten Lösungs- und Fällungspolymerisation ethylenisch ungesättigter Monomere.

Bei der radikalischen Polymerisation ethylenisch ungesättigter Monomere werden zur Kontrolle des Molekulargewichts häufig Regler eingesetzt. Hierbei handelt es sich um Substanzen, die auf das Radikal-Ende der wachsenden Polymerkette ein Radikal übertragen und selbst eine neue Polymerisation initiieren. Hierdurch kommt es zu einer Begrenzung des Polymerisationsgrades der gebildeten Makromoleküle.

Bei der wässrigen Lösungspolymerisation ethylenisch ungesättigter Monomere, d. h. bei der Polymerisation ethylenisch ungesättigter Monomere in einem wässrigen Lösungsmittel in homogener Phase, wurden verschiedentlich wasserlösliche Mercaptoverbindungen, wie Thioethanol, eingesetzt. Von Nachteil ist der starke und äußerst unangenehme Geruch der auf diese Weise erhaltenen wässrigen Polymerlösungen.

Die JP 61255353 beschreibt die Suspensionspolymerisation ungesättigter Monomere in Gegenwart von 1,4-Dimercaptobutan-2,3-diol. Das Mercaptan soll dabei verhindern, dass neben der Suspensionpolymerisation eine Emulsionspolymerisation in der wässrigen Phase als Konkurrenzreaktion stattfindet.

Aufgabe der vorliegenden Erfindung war es, einen Regler für die Lösungs- und Fällungspolymerisation ethylenisch ungesättigter Monomere bereitzustellen, der im Wesentlichen geruchsneutral ist und gleichzeitig eine gute Reglercharakteristik aufweist. Die Aufgabe wurde durch C₄-C₆-Polymercaptopolyole gelöst.

Gegenstand der vorliegenden Erfindung ist daher die Verwendung von C₄-C₆-Polymercaptopolyolen als Regler bei der radikalisch initiierten Lösungs- oder Fällungspolymerisation ethylenisch ungesättigter Monomere in einem wässrigen Lösungsmittel.

Unter Lösungspolymerisation versteht man im Rahmen der vorliegenden Erfindung die Polymerisation ethylenisch ungesättigter Monomere in einem wässrigen Lösungsmittel, wobei sowohl die eingesetzten Monomere als auch die bei der Polymerisation gebildeten Polymere im wässrigen Lösungsmittel löslich sind. Unter Fällungspolymerisation versteht man hingegen die Polymerisation ethylenisch ungesättigter Monomere in einem wässrigen Lösungsmittel, wobei die eingesetzten Monomere im wässrigen Lösungsmittel löslich sind, die bei der Polymerisation gebildeten Polymere jedoch nicht und im Verlauf ihrer Bildung präzipitieren.

Unter C₄-C₆-Polymercaptopolyolen versteht man im Rahmen der vorliegenden Erfindung aliphatische Verbindungen mit 4 bis 6 Kohlenstoffatomen und mit mindestens 2 OH-Gruppen und mindestens 2 SH-Gruppen. Dabei trägt jedes Kohlenstoffatom üblicherweise höchstens eine OH- oder SH-Gruppe.

Vorzugsweise handelt es sich bei den C₄-C₆-Polymercaptopolyolen um Verbindungen der Formel I 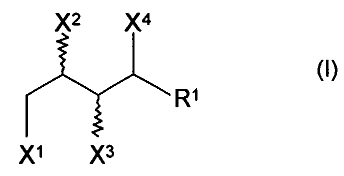 worin
- R¹: für H oder C₁-C₂-Alkyl steht, das durch 1 oder 2 SH- oder OH-Gruppen substituiert sein kann, und
- X¹, X², X³ und X⁴: für H, SH, OH oder C₁-C₂-Alkyl, das durch 1 oder 2 SH- oder OH- Gruppen substituiert sein kann, stehen,

unter der Maßgabe, dass die Verbindungen der Formel I 4 bis 6 Kohlenstoffatome, wenigstens zwei SH-Gruppen und wenigstens 2 OH-Gruppen enthalten, wobei jedes Kohlenstoffatom höchstens eine OH- oder SH-Gruppe trägt.

Für die erfindungsgemäße Verwendung als Regler sind alle Stellungsisomere und Stereoisomere (Diastereomere und Enantiomere) der Verbindung I sowie Gemische davon geeignet.

C₁-C₂-Alkyl, das durch 1 oder 2 SH- oder OH-Gruppen substituiert sein kann, steht beispielsweise für Methyl, Ethyl, Hydroxymethyl, 1- oder 2-Hydroxyethyl, 1,2-Dihydroxyethyl, Mercaptomethyl, 1- oder 2-Mercaptoethyl oder 1,2-Dimercaptoethyl.

Vorzugsweise verwendet man ein Dimercaptobutandiol, d. h. eine Verbindung der Formel I, worin R¹ für H steht und zwei der Gruppen X für SH und zwei der Gruppen X für OH stehen.

Besonders bevorzugt handelt es sich bei der Verbindung der Formel I um 1,4-Dimercaptobutan-2,3-diol.

Unter der Bezeichnung "1,4-Dimercaptobutan-2,3-diol" fallen im Rahmen der vorliegenden Erfindung sämtliche Stereoisomere, d. h. sowohl die Erythro-Form (Meso-Form; auch als Dithioerythrol bezeichnet) als auch das Enantiomerenpaar (R,R- und S,S-Enantiomer) der Threo-Form (auch als Dithiothreitol bezeichnet) sowie Gemische dieser Konformere.

1,4-Dimercaptobutan-2,3-diol ist eine bekannte, kommerziell erhältliche Verbindung. Davon verschiedene Verbindungen der Formel I sind nach bekannten Verfahren des Standes der Technik erhältlich, beispielsweise gemäß dem in der US 4,472,569 beschriebenen Verfahren bzw. durch analoge Umsetzungen.

Der Regler wird vorzugsweise in einer Menge von 0,01 bis 25 Gew.-%, besonders bevorzugt von 0,1 bis 20 Gew.-% und insbesondere von 0,5 bis 15 Gew.-%, bezogen auf die Gesamtmenge der zu polymerisierenden Monomere, eingesetzt.

Unter der Bezeichnung "im Wesentlichen geruchsneutral" wird im Rahmen der vorliegenden Erfindung verstanden, dass das bei der Lösungs- bzw. Fällungspolymerisation gebildete Polymerisat für einen durchschnittlich geruchsempfindlichen Menschen keinen unangenehmen, thiolartigen Geruch aufweist.

Erfindungsgemäß wird die Lösungs- oder Fällungspolymerisation in einem wässrigen Lösungsmittel durchgeführt. Bei dem wässrigen Lösungsmittel handelt es sich vorzugsweise um Wasser oder um ein Gemisch aus Wasser und wenigstens einem mit Wasser im Wesentlichen vollständig mischbaren organischen Lösungsmittel.

Unter "mit Wasser im Wesentlichen vollständig mischbaren organischen Lösungsmitteln" sollen solche verstanden werden, die zu wenigstens 50 Gew.-%, vorzugsweise zu wenigstens 70 Gew.-% und insbesondere in jedem Gewichtsverhältnis mit Wasser mischbar sind. Hierzu gehören C₁-C₄-Alkohole, wie Methanol, Ethanol, Propanol, Isopropanol, n-Butanol, sec-Butanol, Isobutanol und tert-Butanol, Ketone mit drei oder vier Kohlenstoffatomen, wie Aceton oder Methylethylketon, C₂-C₄-Alkandiole und C₂-C₄-Alkantriole wie Ethylenglykol, Propylenglykol oder Glycerin, und cyclische Ether mit vier Kohlenstoffatomen und einem oder zwei Ringsauerstoffatomen, wie Tetrahydrofuran und Dioxan. Vorzugsweise handelt es sich bei den mit Wasser im Wesentlichen mischbaren organischen Lösungsmitteln um C₁-C₃-Alkohole. Geeignete Mischungen enthalten beispielsweise 5 bis 80 Gew.-%, vorzugsweise 5 bis 50 Gew.-% des organischen Lösungsmittels.

Vorzugsweise enthält das wässrige Lösungsmittel wenigstens 50 Gew.-% Wasser. Besonders bevorzugt wird als wässriges Lösungsmittel Wasser verwendet, das höchstens 30 Gew.-%, vorzugsweise höchstens 10 Gew.-% und insbesondere höchstens 5 Gew.-% eines im Wesentlichen mit Wasser mischbaren organischen Lösungsmittels enthält. Insbesondere wird Wasser als alleiniges Reaktionsmedium verwendet.

Der pH-Wert des Reaktionsmediums kann grundsätzlich über weite Bereich variiert werden. In der Regel wird der pH-Wert in Abhängigkeit vom zu polymerisierenden Monomer gewählt und kann vom Fachmann im Einzelfall bestimmt werden. Häufig wird die Polymerisation jedoch bei einem pH-Wert im Bereich von 2 bis 10, vorzugsweise im Bereich von 4 bis 9 durchgeführt. Dabei kann der pH-Wert durch Zugabe einer Base, wie Ammoniak oder Natriumhydroxid, oder einer Säure, wie Salzsäure oder Schwefelsäure, eingestellt bzw. aufrechterhalten werden. Alternativ kann die Polymerisation in Gegenwart eines geeigneten Puffers, beispielsweise Ammoniumhydrogencarbonat, Hydrogenphosphat, Borat, Acetat, Citrat, Succinat, Glycinat oder Phthalat durchgeführt werden.

Zur radikalischen Initiierung der Polymerisationsreaktion werden, wie bei Lösungsoder Fällungspolymerisationen üblich, in der Regel Initiatoren verwendet, d. h. Substanzen, die unter Bildung von Radikalen zerfallen und so die radikalische Polymerisation der ethylenisch ungesättigten Monomere auslösen. Vorteilhafterweise ist ihre Wasserlöslichkeit so groß, dass die verwendete Initiatormenge im Reaktionsmedium vollständig gelöst vorliegt. Vorzugsweise verwendet man Initiatoren, die außerdem thermisch aktivierbar sind, d.h. solche Verbindungen, die beim Erwärmen auf etwa 40 bis 150 °C in Radikale zerfallen. Bevorzugte Polymerisationsinitiatoren umfassen wasserlösliche Azoverbindungen, wie 2,2'-Azobis-[2-(2-imidazolin-2-yl)propan], 2,2'-Azobis-(2-amidinopropan) 2,2'Azobis(2-methylpropionamidin) und deren Säureadditionssalze, insbesondere deren Hydrochloride, Acetate oder (Hydrogen)Sulfate, 4,4'-Azobis(4-cyanovaleriansäure) und deren Alkalimetall- oder Ammoniumsalze, insbesondere deren Natriumsalze, 2-(Carbamoylazo)isobutorynitril; weiterhin wasserlösliche Peroxide und Hydrogenperoxide, wie tert-Butylhydroperoxid, tert-Amylhydroperoxid, Cumolhydroperoxid, Pinanhydroperoxid, Peroxodischwefelsäure und ihre Salze, insbesondere ihre Alkalimetall- oder Ammoniumsalze, z. B. das Natriumsalz (Natriumpersulfat), sowie Wasserstoffperoxid und Percarbonate. Geeignet sind auch Gemische der vorgenannten Initiatoren.

Die genannten Peroxide und Hydrogenperoxide können alleine oder vorzugsweise mit einem Reduktionsmittel, z. B. einem Salz der Hydroxymethansulfinsäure oder Ascorbinsäure, einem (Hydrogen)Sulfit oder einem Thiosulfat und/oder einer Übergangsmetallverbindung, deren Übergangsmetall in wässriger Lösung in verschiedenen Oxidationsstufen vorliegen kann, beispielsweise Eisen(II)-, Cobalt(II)-, Nickel(II)-, Mangan(II)-, Vanadium(II)-, Silber(I)-, Titan(III)- oder Kupfer(I)-Salze, insbesondere die Chloride, Sulfate oder Acetate, verwendet werden (sog. Redoxinitiatorsysteme). Vorzugsweise wird dabei die reduzierende Komponente in molarem Unterschuss, bezogen auf die (Hydrogen)Peroxide, eingesetzt. (Hydrogen)Sulfite als Reduktionsmittel werden häufig jedoch auch im molaren Überschuss eingesetzt.

Besonders bevorzugte Initiatoren sind die Salze der Peroxodischwefelsäure, insbesondere Natriumpersulfat, und Wasserstoffperoxid, wobei diese Initiatoren auch zusammen mit den oben genannten Übergangsmetallsalzen verwendet werden können. Ein besonders bevorzugter Initiator ist auch 2,2'-Azobis(2-methylpropionamidin)-Hydrochlorid.

Der Initiator wird vorzugsweise in einer Menge von 0,05 bis 15 Gew.-%, besonders bevorzugt von 0,5 bis 7 Gew.-% und insbesondere von 0,5 bis 4 Gew.-%, bezogen auf die Gesamtmenge der zu polymerisierenden Monomere, eingesetzt.

Als ethylenisch ungesättigte Monomere kommen grundsätzlich alle diejenigen ethylenisch ungesättigten Monomere in Betracht, die üblicherweise in einer radikalisch initiierten wässrigen Lösungs- oder Fällungspolymerisation eingesetzt werden. Hierbei handelt es sich in der Regel um monoethylenisch ungesättigte wasserlösliche Monomere. Unter wasserlöslichen Monomeren versteht man im Rahmen der vorliegenden Erfindung solche mit einer Wasserlöslichkeit > 80 g/l bei 25 °C.

Geeignet sind jedoch auch Gemische von monoethylenisch ungesättigten wasserlöslichen Monomeren mit begrenzt wasserlöslichen und/oder hydrophoben monoethylenisch ungesättigten Monomeren. Unter begrenzt wasserlöslichen Monomeren versteht man im Rahmen der vorliegenden Erfindung Monomere mit einer Wasserlöslichkeit von 10 bis 80 g/l bei 25 °C. Unter hydrophoben Monomeren versteht man solche mit einer Wasserlöslichkeit von < 10 g/l bei 25 °C. Die zu polymerisierenden Monomere können auch in geringen Mengen zwei- oder mehrfach ethylenisch ungesättigte Monomere umfassen. Vorzugsweise umfassen die zu polymerisierenden Monomere höchstens 10 Gew.-%, besonders bevorzugt höchstens 5 Gew.-% und insbesondere höchstens 1 Gew.-%, bezogen auf das Gesamtgewicht der monoethylenisch ungesättigten Monomere, zwei- oder mehrfach ethylenisch ungesättigte Monomere.

In einer bevorzugten Ausführungsform umfassen die ethylenisch ungesättigten Monomere
A) 45 bis 100 Gew.-% monoethylenisch ungesättigte Monomere mit einer Wasserlöslichkeit von > 80 g/l bei 25 °C;
B) 0 bis 55 Gew.-% monoethylenisch ungesättigte Monomere mit einer Wasserlöslichkeit von 10 bis 80 g/l bei 25 °C und
C) 0 bis 5 Gew.-% monoethylenisch ungesättigte Monomere mit einer Wasserlöslichkeit von < 10 g/l bei 25 °C,
wobei sich die Gew.-%-Angaben auf das Gesamtgewicht der eingesetzten Monomere beziehen.

### A) Wasserlösliche Monomere:

Geeignete wasserlösliche Monomere A) sind beispielsweise unter folgenden Substanzklassen ausgewählt:

### 1) Aliphatische α,β-ungesättigte C₃-C₈-Monocarbonsäuren und bestimmte Derivate davon:

Geeignete aliphatische α,β-ungesättigte C₃-C₈-Monocarbonsäuren sind beispielsweise Acrylsäure, Methacrylsäure, Crotonsäure, Isocrotonsäure, Ethylacrylsäure, Dimethylacrylsäure, Allylessigsäure und Vinylessigsäure.

Geeignete Carbonsäure-Derivate sind beispielsweise die Salze der aliphatischen α,β-ungesättigten C₃-C₈-Monocarbonsäuren. Geeignete Salze der oben genannten Carbonsäuren umfassen Alkalimetall- und Erdalkalimetallsalze, z.B. die Natrium-, Kalium-, Magnesium- oder Calciumsalze, sowie die Ammoniumsalze. Geeignete Ammoniumsalze sind sowohl die Salze des Ammoniumkations NH₄⁺ selbst, als auch Mono-, Di-, Tri- oder Tetraalkyl- oder -hydroxyalkyl-substituierte Ammoniumkationen, beispielsweise Mono-, Di-, Tri- oder Tetramethylammonium, Tetrabutylammonium, Diethanolammonium, Triethanolammonium und dergleichen. Die Salze sind beispielsweise dadurch erhältlich, dass die freien Säuren vor der Polymerisation mit Hilfe einer geeigneten Base, vorzugsweise in Form einer wässrigen oder wässrig-alkoholischen Lösung, in die anionische Form überführt werden. Geeignete Basen umfassen die Hydroxide und Carbonate der vorgenannten Alkalimetalle, Calciumhydroxid, Ammoniak und organische Amine, Pyridine und Amidine. Geeignete organische Amine umfassen insbesondere Mono-, Di- oder Trialkanolamine mit 2 bis 5 Kohlenstoffatomen im Alkanolrest, wie Mono-, Di- oder Triethanolamin, Mono-, Di- oder Tri(iso)propanolamin oder 2-Amino-2-methylpropanol; Alkandiolamine mit 2 bis 4 Kohlenstoffatomen im Alkandiolrest, wie 2-Amino-2-methyl-1,3-propandiol oder 2-Amino-2-ethyl-1,3-propandiol; Alkanpolyolamine und Aminoether, wie Morpholin.

Weitere geeignete Derivate sind die Ester der aliphatischen α,β-ungesättigten C₃-C₈-Monocarbonsäuren mit C₂-C₃-Diolen. Beispiele für geeignete Ester sind Hydroxy(meth)acrylate, wie 2-Hydroxyethyl(meth)acrylat und 2- und 3-Hydroxypropyl(meth)-acrylat.

Außerdem gehören zu den geeigneten Derivaten die Ester der aliphatischen α,β-ungesättigten C₃-C₈-Monocarbonsäuren mit Polyetherpolyolen. Geeignete Polyetherpolyole sind solche der Formel HO⁅AO⁆ₙ-A-OH, worin A für Ethylen oder Propylen und n für eine Zahl von 1 bis 100 stehen. Geeignete Ester sind beispielsweise die (Meth)acrylsäureester von Polyethylenglycol oder Polypropylenglycol sowie die (Meth)acrylsäureester von Polyethylenglycol/Polyproylenglycol-Blockcopolyethern.

Geeignete Derivate sind ferner die Ester der aliphatischen α,β-ungesättigten C₃-C₈-Monocarbonsäuren mit C₂-C₃-Aminoalkoholen. Geeignete Aminoalkohole sind beispielsweise 2-Aminoethanol und 3-Aminopropanol. Die Aminofunktion kann auch quaternisiert vorliegen.

Weitere geeignete Derivate sind die Amide der aliphatischen α,β-ungesättigten C₃-C₈-Monocarbonsäuren. Geeignete Amide sind solche, die durch die Umsetzung der Carbonsäure bzw. geeigneter Derivate davon mit Ammoniak oder Mono- oder Di-C₁-C₂-alkylaminen, wie Methyl-, Ethyl-, Dimethyl- oder Diethylamin, erhältlich sind.

Außerdem gehören zu den geeigneten Derivaten die Amide der aliphatischen α,β-ungesättigten C₃-C₈-Monocarbonsäuren mit Diaminen (Aminoamide). Geeignete Aminoamide sind beispielsweise durch die Umsetzung der Carbonsäure bzw. eines geeigneten Derivats davon mit einem C₂-C₃-Diaminoalkan erhältlich. Beispiele für geeignete Diaminoalkane sind Ethylendiamin, 1,3-Propylendiamin, N-Methylethylendiamin, N,N-Dimethylethylendiamin, N-Methylpropylendiamin und N,N-Dimethylpropylendiamin. Die in den Aminoamiden enthaltene Aminofunktion kann auch quaternisiert vorliegen.

Schließlich gehören zu den geeigneten Derivaten auch die N-Methylolamide der aliphatischen α,β-ungesättigten C₃-C₈-Monocarbonsäuren mit Methylolamin, z. B. N-Methylol(meth)acrylamid

### 2) Weiterhin gehören zu den geeigneten wasserlöslichen Monomeren A) aliphatische α,β-ungesättigte C₄-C₈-Dicarbonsäuren und geeignete Derivate davon.

Zu den geeigneten aliphatischen α,β-ungesättigten C₄-C₈-Dicarbonsäuren gehören Maleinsäure, Fumarsäure, Itaconsäure, Citraconsäure und Mesaconsäure.

Geeignete Dicarbonsäure-Derivate sind beispielsweise die Anhydride der vorgenannten Dicarbonsäuren, z. B. Maleinsäureanhydrid oder Citraconsäureanhydrid.

Geeignete Derivate sind ferner die Salze der aliphatischen α,β-ungesättigten C₄-C₈-Dicarbonsäuren. Geeignet sind sowohl die Mono- als auch die Di-Salze der vorgenannten Dicarbonsäuren mit den zuvor genannten Gegenkationen.

Außerdem gehören zu den geeigneten Derivaten die Mono-C₁-C₂-alkylester der aliphatischen α,β-ungesättigten C₄-C₈-Dicarbonsäuren. Geeignete Beispiele hierfür sind Maleinsäuremonomethylester, Fumarsäuremonomethylester und Itaconsäuremonomethylester. Die nichtveresterte Carboxylgruppe kann auch in Form des Carboxylatanions vorliegen.

Ferner zählen zu den geeigneten Derivaten die Mono- und Diamide der aliphatischen α,β-ungesättigten C₄-C₈-Dicarbonsäuren. Geeignete Amide sind solche, die durch die Umsetzung der Dicarbonsäure bzw. eines geeigneten Derivats davon mit Ammoniak oder einem Mono- oder Di-C₁-C₂-dialkylamin, wie Methyl-, Ethyl-, Dimethyl- oder Diethylamin, erhältlich sind. Im Falle der Monoamide kann diejenige Carboxylgruppe, die nicht die Amidfunktion trägt, auch in Form des Carboxylatanions vorliegen.

Weitere geeignete Derivate sind die Halb- und Diester der aliphatischen α,β-ungesättigten C₄-C₈-Dicarbonsäuren mit Polyetherpolyolen. Geeignete Polyetherpolyole sind die zuvor genannten.

### Außerdem sind folgende wasserlösliche Monomere geeignet:

### 3) Ethylenisch ungesättigte Sulfonsäuren und deren Salze:

Beispiele für geeignete Sulfonsäuren sind Vinylsulfonsäure, Styrolsulfonsäure, Allylsulfonsäure, Methallylsulfonsäure, 2-Acrylamido-3-methylpropansulfonsäure, 2-Methylacrylamido-2-methylpropansulfonsäure, (Meth)Acrylsäure-3-sulfopropylester und (Meth)Acrylsäure-2-sulfoethylester. Besonders geeignet sind die Alkali- oder Ammoniumsalze, beispielsweise das Natrium-, Kalium- oder Ammoniumsalze der vorgenannten Sulfonsäuren. Die Säuren können auch in teilneutralisierter Form eingesetzt werden.

### 4) Ethylenisch ungesättigte Phosphonsäuren und deren Salze:

Beispiele für geeignete Phosphonsäuren sind Vinylphosphonsäure, Allylphosphonsäure und Acrylamidomethylpropanphosphonsäure und insbesondere deren Alkali- oder Ammoniumsalze, beispielsweise das Natrium-, Kalium- oder Ammoniumsalz. Auch die Phosphonsäuren können in teilneutralisierter Form eingesetzt werden.

### 5) N-Vinylcarbonsäureamide:

Geeignete N-Vinylcarbonsäureamide sind beispielsweise N-Vinylformamid, N-Vinylacetamid und N-Methyl-N-vinylacetamid.

### 6) Aromatische und nicht aromatische N-Vinylheterocyclen:

a) Geeignete nicht aromatische N-Vinylheterocyclen sind beispielsweise N-Vinyllactame, wie N-Vinylcaprolactam, N-Vinylpiperidon und N-Vinylpyrrolidon, sowie N-Vinylimidazoline, wie N-Vinylimidazolin, 2-, 4- und 5-Methyl-1-vinylimidazolin. Die Vinylimidazoline liegen insbesondere in quaternisierter Form vor.
b) Geeignete aromatische N-Vinylheterocyclen sind beispielsweise N-Vinylimidazole, wie N-Vinylimidazol, 2-, 4- und 5-Methyl-1-vinylimidazol und 2-Ethyl-1-vinylimidazol sowie 2-, 3- und 4-Vinylpyridine und insbesondere die quaternisierten Derivate der N-Vinylimidazole und Vinylpyridine.

Die bei den wasserlöslichen Monomeren A) genannten quartären Derivate der stickstoffbasischen Verbindungen sind in der Regel dadurch erhältlich, dass man die entsprechende stickstoffbasische Verbindung, z. B. die N-Vinylimidazole, die N-Vinylimidazoline, die Vinylpyridine, die Amidoamine oder die Aminoalkylester der Carbonsäuren mit einem geeigneten Alkylierungsreagenz in die quartäre Form überführt. Geeignete Alkylierungsmittel umfassen Alkylhalogenide, wie Methylchlorid, Methylbromid, Methyliodid, Ethylchlorid, Propylchlorid, Benzylchlorid oder Benzylbromid, weiterhin Dialkylsulfate, wie Dimethylsulfat oder Diethylsulfat sowie Alkylenoxide, wie Ethylenoxid oder Propylenoxid, in Gegenwart von Säuren. Bevorzugte Alkylierungsmittel sind Methylchlorid, Dimethylsulfat und Diethylsulfat. Quaternisierte Aminoester oder Aminoamide sind auch dadurch erhältlich, dass man den Aminoalkohol bzw. das Diamin bereits in quaternisierter Form in die Veresterungs- bzw. Amidbildungsreaktion einsetzt.

Bevorzugte wasserlösliche Monomere A) sind die vorstehend genannten aliphatischen α,β-ungesättigten C₃-C₈-Monocarbonsäuren und ihre Derivate sowie die N-Vinylimidazole. Hierunter sind Acrylsäure, Methacrylsäure und N-Vinylimidazol besonders bevorzugt. Bevorzugte wasserlösliche Monomere A) sind außerdem die vorstehend genannten aliphatischen α,β-ungesättigten C₄-C₈-Dicarbonsäuren und ihre Anhydride.

### B) Begrenzt wasserlösliche Monomere:

Geeignete begrenzt wasserlösliche Monomere B) sind beispielsweise (Meth)acrylonitril, (Meth)acrylate von C₁-C₁₂-Alkoholen, wie Methylacrylat, Methylmethacrylat, Ethylacrylat und Ethylmethacrylat und die Vinylester von C₂-C₃-Monocarbonsäuren, wie Vinylacetat und Vinylpropionat.

### C) Hydrophobe Monomere:

Als Monomere C) kommen grundsätzlich alle hydrophoben Monomere mit einer Wasserlöslichkeit < 10 g/l bei 25 °C in Frage, die mit den Monomeren A) und gegebenenfalls B) copolymerisierbar sind. Hierbei kommen insbesondere in Betracht:
1) Die Ester der vorstehend genannten aliphatischen α,β-ungesättigten C₃-C₈-Monocarbonsäuren mit C₃-C₁₆-Alkanolen oder C₅-C₁₀-Cycloalkanolen, wie Propanol, Isopropanol, n-Butanol, sec-Butanol, Isobutanol, tert-Butanol, n-Pentanol, n-Hexanol, 2-Ethylhexan-1-ol, n-Octanol, n-Decanol, Cyclohexanol, 4-tert-Butylhexanol und 2,3,5-Trimethylcyclohexanol.
2) Die Diester der vorstehend genannten aliphatischen α,β-ungesättigten C₄-C₈-Dicarbonsäuren mit den vorstehend genannten C₃-C₁₃-Alkanolen oder C₅-C₁₀-Cycloalkanolen, beispielsweise Maleinsäure-di-n-butylester.
3) Vinyl-, Allyl- und Methallylester linearer oder verzweigter, aliphatischer Carbonsäuren mit 4 bis 20 Kohlenstoffatomen, wie Vinylbutyrat, Vinylvalerat, Vinylhexanoat, Vinyl-2-ethylhexanoat, Vinyldecanoat, Vinyllaurat und Vinylstearat sowie die entsprechenden Allyl- und Methallylester.
4) Vinylaromatische Verbindungen.
   Als vinylaromatische Verbindungen kommen beispielsweise Styrol und α-Methylstyrol in Betracht, die gegebenenfalls am aromatischen Ring einen oder mehrere Substituenten aufweisen können, die ausgewählt sind unter C₁-C₄-Alkyl, Halogenatomen, insbesondere Chlor, und/oder Hydroxygruppen, die gegebenenfalls ethoxyliert sein können. Beispiele hierfür sind Styrol, α-Methylstyrol, α-Butylstyrol, o-, m-, p-Vinyltoluol, 2,4-Dimethylstyrol, 3-Ethylstyrol, 2,4-Diethylstyrol, 2-Methoxystyrol, 4-Methoxy-3-methylstyrol, 4-Acetoxystyrol und Vinylnaphthalinderivate.
5) Vinyl-, Allyl- und Methallylether linearer oder verzweigter aliphatischer Alkohole mit 2 bis 20 Kohlenstoffatomen.
   Hierfür geeignete Beispiele sind Vinylmethylether, Vinylethylether, Vinyldodecylether, Vinylhexadecylether und Vinylstearylether und die entsprechenden Allyl- und Methallylether.
6) Konjugierte Diene.
   Hierfür geeignete Beispiele sind konjugierte C₄-C₁₀-Diene, wie Butadien, Isopren und 1-Phenylbutadien.
7) Vinylchlorid und Vinylidenchlorid.

Bevorzugte hydrophobe Monomere sind Styrol und α-Methylstyrol.

Vorzugsweise enthält das in die Lösungs- oder Fällungspolymerisation eingesetzte Monomerengemisch wenigstens 60 Gew.-%, besonders bevorzugt wenigstens 80 Gew.-% und insbesondere wenigstens 90 Gew.-% monoethylenisch ungesättigte Monomere mit einer Wasserlöslichkeit von > 80 g/l.

Vorzugsweise enthält das in die Polymerisation eingesetzte Monomerengemisch höchstens 3 Gew.-%, besonders bevorzugt höchstens 1 Gew.-% monoethylenisch ungesättigte Monomere mit einer Wasserlöslichkeit < 10 g /l.

In einer alternativen bevorzugten Ausführungsform enthält das Monomerengemisch wenigstens 80 Gew.-%, insbesondere wenigstens 90 Gew.-%, monoethylenisch ungesättigte Monomere mit einer Wasserlöslichkeit von ≥ 50 g/l.

In einer speziellen Ausführungsform verwendet man als Monomer Acrylsäure, Methacrylsäure oder N-Vinylimidazol.

Die bei der Polymerisation erhaltenen Polymerisate weisen einen Feststoffgehalt von vorzugsweise 10 bis 60 Gew.-%, besonders bevorzugt von 15 bis 50 Gew.-%, insbesondere von 20 bis 50 Gew.-%, bezogen auf das Gesamtgewicht der Polymerisatlösung, auf.

Die in Gegenwart der erfindungsgemäß verwendeten C₄-C₆-Polymercaptopolyole erhaltenen Polymerisate besitzen ein gewichtsmittleres Molekulargewicht M_{w} von vorzugsweise 500 bis 100000, besonders bevorzugt von 1000 bis 50000 und insbesondere von 1500 bis 30000. Die K-Werte der Polymerisate nach Fikentscher (H. F. Fikentscher, Zellulose-Chemie, Band XIII, 1932, Seite 58 bis 64) gemessen als 1 gew.-%ige Lösung des Polymerisats in Wasser bei pH 7) betragen wenigstens 5, vorzugsweise wenigstens 7 und insbesondere wenigstens 10.

Die Lösungspolymerisation bzw. die Fällungspolymerisation erfolgt nach üblichen, dem Fachmann bekannten Verfahren. So kann man beispielsweise Monomer und C₄-C₆-Polymercaptopolyol im Lösungsmittel vorlegen, auf die Reaktionstemperatur erwärmen und die Polymerisation durch Zugabe des Initiators in Gang setzen. Alternativ kann man zunächst den Regler im Lösungsmittel vorlegen und auf die Reaktionstemperatur erwärmen und anschließend das Monomer und den Initiator getrennt zugeben. Schließlich ist es möglich, sowohl Regler als auch Monomer und Initiator jeweils getrennt zuzugeben, wobei die Zugabe auf einmal, absatzweise oder vorzugsweise kontinuierlich zu dem auf die Polymerisationstemperatur erwärmten Lösungsmittel erfolgt. Wird ein Initiatorsystem aus zwei oder mehreren Komponenten verwendet, so kann eine Komponente im Reaktionsansatz vorgelegt und die andere zudosiert werden. Es können jedoch auch alle Initiatorkomponenten gemeinsam zudosiert werden.

Die Polymerisation kann auch in Gegenwart geeigneter Korrosionsinhibitoren, wie phosphorige Säure, durchgeführt werden. Dies ist insbesondere dann von Vorteil, wenn Säuregruppen-haltige Monomere in Reaktionsgefäßen aus korrodierbarem Material polymerisiert werden sollen.

Die Polymerisationstemperatur ist im Wesentlichen von den eingesetzten Initiatoren abhängig, insbesondere, wenn diese thermisch aktivierbar sind. Vorzugsweise erfolgt die Polymerisationsreaktion bei einer Temperatur von 70 bis 150 °C, besonders bevorzugt von 80 bis 130 °C.

Der Reaktionsdruck ist von untergeordneter Bedeutung. Die Polymerisation kann daher sowohl bei Atmosphärendruck als auch bei Über- oder Unterdruck erfolgen. Vorzugsweise wird sie unter Ausschluss von Sauerstoff, insbesondere in Gegenwart eines Inertgases, beispielsweise Stickstoff, durchgeführt.

Zur Erzielung möglichst reiner Polymere mit geringem Restmonomergehalt kann sich an die Hauptpolymerisation ein Nachpolymerisationsschritt anschließen. Die Nachpolymerisation kann in Gegenwart desselben oder eines anderen Initiatorsystems für die Hauptpolymerisation stattfinden. Die Nachpolymerisation kann bei der gleichen, bei einer höheren oder einer niedrigeren Temperatur als die Hauptpolymerisation erfolgen. Es ist auch möglich, zum Erhalt von Produkten mit besonders hoher Reinheit nach der Polymerisation, gegebenenfalls vor und/oder nach einer Nachpolymerisation, eine Wasserdampfdestillation bzw. einem Strippen mit Wasserdampf zu unterziehen. Diese Behandlung dient beispielsweise der Entfernung von unerwünschten, mit Wasserdampf entfernbarer Verunreinigungen, z. B. Restmonomere aus dem Reaktionsgemisch. Die Nachbehandlung ist jedoch nicht zwingend erforderlich, um unangenehme Gerüche, die von schwefelhaltigen Reglern des Standes der Technik stammen, zu entfernen. Auf jeden Fall ist die Dauer der Nachbehandlung bei der erfindungsgemäßen Verwendung von C₄-C₆-Polymercaptopolyolen als Regler deutlich geringer als im Falle der Verwendung üblicher Thiole.

Die Polymerlösungen aus der Lösungspolymerisation bzw. die Polymerdispersionen aus der Fällungspolymerisation können durch verschiedene Trocknungsverfahren, wie Sprühtrocknung, Fluidized Spray Drying, Walzentrocknung oder Gefriertrocknung in Pulverform überführt werden. Vorzugsweise wird das Produkt einer Sprühtrocknung unterworfen. Diese erhaltenen Polymertrockenpulver lassen sich in der Regel besser lagern, einfacher transportieren und lassen sich bei Bedarf durch Lösen bzw. Redispergieren in Wasser in eine wässrige Lösung bzw. Dispersion überführen.

Durch die erfindungsgemäße Verwendung von C₄-C₆-Polymercaptopolyolen in der Lösungs- oder Fällungspolymerisation ethylenisch ungesättigter Verbindungen lassen sich Polymere herstellen, die auch ohne aufwändige Nachbehandlung zur Entfernung des Reglers geruchsneutral sind.

Die vorliegende Erfindung wird durch die nachfolgenden Beispiele veranschaulicht.

### Beispiele

Acrylsäure, Methacrylsäure und Vinylimidazol wurden jeweils in Gegenwart des erfindungsgemäßen 1,4-Dimercaptobutan-2,3-diols bzw. in Gegenwart von nicht erfindungsgemäßen Reglern in einer Lösungspolymerisation polymerisiert und die Eigenschaften der erhaltenen Polymerisate bestimmt.

### 1. Polymerisation von Acrylsäure

### Beispiel 1. 1

Polymerisation von Acrylsäure in Gegenwart von 1,4-Dimercaptobutan-2,3-diol als Regler.

In einem Reaktor mit Rührer, Stickstoffzufuhr, Rückflusskühler und Dosiervorrichtung wurden 300 g destilliertes Wasser vorgelegt und unter Stickstoffzufuhr auf 100 °C Innentemperatur erwärmt. Hierzu wurden kontinuierlich in drei getrennten Zuläufen 571 g Acrylsäure innerhalb von 4 Stunden, eine Mischung aus 5,71 g Natriumpersulfat und 57,0 g destilliertem Wasser innerhalb von 4 Stunden 15 Minuten und ein Gemisch aus 34,26 g 1,4-Dimercaptobutan-2,3-diol und 100 g destilliertem Wasser innerhalb von 3 Stunden 45 Minuten zugegeben. Nach beendetem Initiatorzulauf wurde auf 80 °C gekühlt und ein Gemisch aus 0,644 g 2,2'-Azobis(2-methylpropionamidin)hydrochlorid und 21 g destilliertem Wasser innerhalb von 30 Minuten kontinuierlich zudosiert. Danach wurde eine weitere Stunde bei 80°C gerührt und anschließend mit 615 g 50 gew.-%iger Natronlauge auf einen pH-Wert von 7,5 eingestellt, wobei man die Temperatur auf 80 °C hielt. Man erhielt eine schwach gelbliche klare Lösung mit einem Feststoffgehalt von 48,7 % und einem K-Wert (1%ig in Wasser) von 30,3. Das gewichtsmittlere Molekulargewicht M_{w} betrug 7700 g/mol.

### Vergleichsbeispiel 1.1

### Polymerisation von Acrylsäure in Gegenwart von Mercaptoethanol als Regler

In einem Reaktor mit Rührer, Stickstoffzufuhr, Rückflusskühler und Dosiervorrichtung wurden 525 g destilliertes Wasser vorgelegt und unter Stickstoffzufuhr auf 99 °C Innentemperatur erwärmt. Hierzu wurden kontinuierlich in drei getrennten Zuläufen ein Gemisch aus 1000,0 g Acrylsäure und 175,0 g destilliertem Wasser innerhalb von 4 Stunden, ein Gemisch aus 10,0 g Natriumpersulfat und 100 g destilliertem Wasser innerhalb von 4 Stunden 30 Minuten und 50,0 g Mercaptoethanol innerhalb von 3 Stunden 45 Minuten zugegeben. Nach beendetem Initiatorzulauf wurde auf 80°C gekühlt und ein Gemisch aus 1,25 g 2,2'-Azobis(2-methylpropionamidin)hydrochlorid und 36,75 g destilliertem Wasser innerhalb von 30 Minuten kontinuierlich zudosiert. Danach wurde eine weitere Stunde bei 80 °C gerührt und anschließend mit 980,5 g 50 gew.-%iger Natronlauge auf einen pH-Wert von 7 eingestellt, wobei die Temperatur bei 80 °C gehalten wurde. Man erhielt eine stark riechende, schwach gelbliche klare Lösung mit einem Feststoffgehalt von 46,7% und einem K-Wert (1 %ig in Wasser) von 30,1. Das gewichtsmittlere Molekulargewicht M_{w} betrug 8400 g/mol.

### Vergleichsbeispiel 1.2

### Polymerisation von Acrylsäure in Gegenwart von Dodecylmercaptan als Regler

In einem Reaktor mit Rührer, Stickstoffzufuhr, Rückflusskühler und Dosiervorrichtung wurden 300,0 g destilliertes Wasser vorgelegt und unter Stickstoffzufuhr auf 100 °C Innentemperatur erwärmt. Hierzu wurden kontinuierlich in drei getrennten Zuläufen ein Gemisch aus 571 g Acrylsäure und 100 g destilliertem Wasser innerhalb von 4 Stunden, ein Gemisch aus 5,71 g Natriumpersulfat und 57,0 g destilliertem Wasser innerhalb von 4 Stunden 15 Minuten und 34,3 g Dodecylmercaptan innerhalb von 3 Stunden 45 Minuten zugegeben. Das Reaktionsgemisch wurde trüb und sehr viskos. Nach beendetem Dodecylmercaptanzulauf wurde mit 100 g destilliertem Wasser verdünnt und nach beendetem Initiatorzulauf wurde auf 80 °C gekühlt, mit weiteren 100 g destilliertem Wasser verdünnt und ein Gemisch aus 0,644 g
2,2'-Azobis(2-methylpropionamidin)hydrochlorid und 21 g destilliertem Wasser innerhalb von 30 Minuten kontinuierlich zudosiert. Danach wurde eine weitere Stunde bei 80 °C gerührt und anschließend mit 50 gew.-%iger Natronlauge auf einen pH-Wert von 7,5 eingestellt, wobei die Temperatur auf 80 °C gehalten wurde. Man erhielt eine schwach gelbliche, trübe, hochviskose Lösung mit einem Feststoffgehalt von 25 % und einem K-Wert (0,1 %ig in Wasser) von 269. Das gewichtsmittlere Molekulargewicht M_{w} betrug 790000 g/mol.

### Beispiel 2.1

Polymerisation von Methacrylsäure In Gegenwart von 1,4-Dimercaptobutan-2,3-diol als Regler.

In einem Reaktor mit Rührer, Stickstoffzufuhr, Rückflusskühler und Dosiervorrichtung wurden 350 g destilliertes Wasser vorgelegt und unter Stickstoffzufuhr auf 90 °C Innentemperatur erwärmt. Zu diesem Gemisch wurden kontinuierlich in drei getrennten Zuläufen ein Gemisch aus 200 g Methacrylsäure, 55 g 50 gew.-%iger Natronlauge und 350 g destilliertem Wasser innerhalb von 5 Stunden, ein Gemisch aus 2,0 g Natriumpersulfat und 100 g destilliertem Wasser innerhalb von 5 Stunden 15 Minuten und ein Gemisch aus 2 g 1,4-Dimercaptobutan-2,3-diol und 100 g destilliertem Wasser innerhalb von 5 Stunden zugeben. Nach beendeten Zuläufen wurde 1 Stunde 30 Minuten bei 95 °C polymerisiert. Man erhielt eine farblose klare Lösung mit einem Feststoffgehalt von 18 %, einem pH-Wert von 4,7 und einem K-Wert (1% der neutralisierten Polymerlösung in destilliertem Wasser) von 38. Das gewichtsmittlere Molekulargewicht betrug 15000 g/mol.

### Vergleichsbeispiel 2.1

### Polymerisation von Methacrylsäure ohne Regler

In einem Reaktor mit Rührer, Stickstoffzufuhr, Rückflusskühler und Dosiervorrichtung wurden 350 g destilliertes Wasser vorgelegt und unter Stickstoffzufuhr auf 90 °C Innentemperatur erwärmt. Hierzu wurden kontinuierlich in zwei getrennten Zuläufen ein Gemisch aus 200 g Methacrylsäure, 55 g 50 gew.-%iger Natronlauge und 350 g destilliertem Wasser innerhalb von 5 Stunden und ein Gemisch aus 2,0 g Natriumpersulfat und 100 g destilliertem Wasser innerhalb von 5 Stunden 15 Minuten zugegeben. Nach beendetem Zulauf wurde 1 Stunde 30 Minuten bei 95 °C polymerisiert. Man erhielt eine farblose klare Lösung mit einem Feststoffgehalt von 21,9 %, einem pH-Wert von 5,0 und einem K-Wert (1% der neutralisierten Polymerlösung in destilliertem Wasser) von 72. Das gewichtsmittlere Molekulargewicht M_{w} betrug 80000 g/mol.

### Beispiel 3.1

### Polymerisation von Vinylimidazol in Gegenwart von 1,4-Dimercaptobutan-2,3-diol als Regler

In einem Reaktor mit Rührer, Stickstoffzufuhr, Rückflusskühler und Dosiervorrichtung wurden 276 g destilliertes Wasser vorgelegt und unter Stickstoffzufuhr auf 80 °C Innentemperatur erwärmt. Hierzu wurden kontinuierlich in drei getrennten Zuläufen 200 g Vinylimidazol innerhalb von 3 Stunden, ein Gemisch aus 4,0 g
2,2'-Azobis(2-methylpropionamidin)hydochlorid und 100 g destilliertem Wasser innerhalb von 3 Stunden 30 Minuten und ein Gemisch aus 4,0 g 1,4-Dimercaptobutan-2,3-diol und 100 g destilliertem Wasser innerhalb von 3 Stunden zugegeben. Nach beendetem Zulauf wurde 1 Stunde bei 80 °C polymerisiert. Danach wurde innerhalb von 30 Minuten ein Gemisch aus 1,0 g 2,2'-Azobis(2-methylpropionamidin)hydrochlorid und 20 g destilliertem Wasser zugegeben und 2 Stunden bei 80 °C polymerisiert. Man erhielt eine braune, klare Lösung mit einem Feststoffgehalt von 28,5 %, einem pH-Wert von 8,1 und einem K-Wert (1 % der neutralisierten Polymerlösung in destilliertem Wasser) von 26. Das gewichtsmittlere Molekulargewicht M_{w} betrug 40400 g/mol.

### Vergleichsbeispiel 3.1

### Polymerisation von Vinylimidazol in Gegenwart von Mercaptoethanol als Regler

In einem Reaktor mit Rührer, Stickstoffzufuhr, Rückflusskühler und Dosiervorrichtung wurden 276 g destilliertes Wasser vorgelegt und unter Stickstoffzufuhr auf 80 °C Innentemperatur erwärmt. Hierzu wurden kontinuierlich in drei getrennten Zuläufen 200 g Vinylimidazol innerhalb von 3 Stunden, ein Gemisch aus 4,0 g
2,2'-Azobis(2-methylpropionamidin)hydochlorid und 100 g destilliertem Wasser innerhalb von 3 Stunden 30 Minuten und ein Gemisch aus 4,0 g Mercaptoethanol und 100 g destilliertem Wasser innerhalb von 3 Stunden zugegeben. Nach beendetem Zulauf wurde 1 Stunde bei 80 °C polymerisiert. Danach wurde innerhalb von 30 Minuten ein Gemisch aus 1,0 g 2,2'-Azobis(2-methylpropionamidin)hydrochlorid und 20 g destilliertem Wasser zugegeben und 2 Stunden bei 80 °C polymerisiert. Man erhielt eine stark riechende, braune, klare Lösung mit einem Feststoffgehalt von 29,6 %, einem pH-Wert von 8,2 und einem K-Wert (1 % der neutralisierten Polymerlösung in destilliertem Wasser) von 26. Das gewichtsmittlere Molekulargewicht M_{w} betrug 41400 g/mol.

Die Eigenschaften der in den Beispielen und Vergleichsbespielen erhaltenen Polymerisate sind in nachfolgender Tabelle zusammengestellt:

| **Beispiel** | **Monomer** | **Geruch des Produktes** **(olfaktorisch)** | **K-Wert** **(1% in H**_{**2**}**O)** | **Molekulargewicht** **M**_{**w**} **[g/mol]** |
|---|---|---|---|---|
| Beispiel 1.1 | Acrylsäure | schwach | 30 | 7700 |
| Vergleichsbeispiel 1.1 | Acrylsäure | sehr stark | 30 | 8400 |
| Vergleichsbeispiel 1.2 | Acrylsäure | sehr stark | 269* | 790000 |
| Beispiel 2.1 | Methacrylsäure | schwach | 38 | 15000 |
| Vergleichsbeispiel 2.1 | Methacrylsäure | schwach | 72 | 80000 |
| Beispiel 3.1 | Vinylimidazol | schwach | 26 | 40400 |
| Vergleichsbeispiel 3.1 | Vinylimidazol | sehr stark | 26 | 41400 |

| | | | | |
|---|---|---|---|---|
| * 0,1% in H₂O, Verdünnung aufgrund der hohen Viskosität erforderlich | | | | |

## Patentansprüche

1. Verwendung von C₄-C₆-Polymercaptopolyolen als Regler bei der radikalisch initiierten Lösungs- oder Fällungspolymerisation ethylenisch ungesättigter Monomere in einem wässrigen Lösungsmittel.

2. Verwendung nach Anspruch 1, wobei es sich bei den C₄-C₆-Polymercaptopolyolen um 1,4-Dimercaptobutan-2,3-diol handelt.

3. Verwendung nach einem der vorhergehenden Ansprüche, wobei es sich bei dem wässrigen Lösungsmittel um Wasser oder ein Gemisch aus Wasser und wenigstens einem mit Wasser im Wesentlichen vollständig mischbaren organischen Lösungsmittel handelt.

4. Verwendung nach Anspruch 3, wobei der Wasseranteil des wässrigen Lösungsmittels wenigstens 50 Gew.-% beträgt.

5. Verwendung nach einem der vorhergehenden Ansprüche, wobei die ethylenisch ungesättigten Monomere
A) 45 bis 100 Gew.-% monoethylenisch ungesättigte Monomere mit einer Wasserlöslichkeit von > 80 g/l
B) 0 bis 55 Gew.-% monoethylenisch ungesättigte Monomere mit einer Wasserlöslichkeit von 10 bis 80 g/l
C) 0 bis 5 Gew.-% monoethylenisch ungesättigte Monomere mit einer Wasserlöslichkeit von < 10 g/l
umfassen.

6. Verwendung nach einem der Ansprüche 1 bis 4, wobei die ethylenisch ungesättigten Monomere wenigstens 80 Gew.-% Monomere mit einer Wasserlöslichkeit von wenigstens 50 g/l umfassen.

7. Verwendung nach einem der vorhergehenden Ansprüche, wobei die C₄-C₆-Polymercaptopolyole in einer Menge von 0,01 bis 25 Gew.-%, bezogen auf das Gesamtgewicht der Monomere, eingesetzt werden.

8. Verwendung nach einem der vorhergehenden Ansprüche, wobei die Polymerisation durch einen die radikalische Polymerisation auslösenden Initiator initiiert wird.

9. Verwendung nach Anspruch 8, wobei der Initiator unter wasserlöslichen Peroxiden, Hydroperoxiden und Azoverbindungen ausgewählt ist.

10. Verwendung nach einem der Ansprüche 8 oder 9, wobei der Initiator in einer Menge von 0,05 bis 15 Gew.-%, bezogen auf das Gesamtgewicht der ethylenisch ungesättigten Monomere, eingesetzt wird.

11. Verfahren zur Herstellung von Polymeren durch radikalisch initiierte Lösungsoder Fällungspolymerisation ethylenisch ungesättigter Monomere in einem wässrigen Lösungsmittel in Gegenwart eines Reglers, **dadurch gekennzeichnet, dass** man als Regler C₄-C₆-Polymercaptopolyole verwendet.
